# EUROPÄISCHE PATENTANMELDUNG

(11) **EP 3 799 262 A1**
(43) Veröffentlichungstag der Anmeldung: **31.03.2021**
(21) Anmeldenummer: 19199993.7
(22) Anmeldetag: 27.09.2019
(51) Int. Cl.: H02K 1/27

(54) **ELEKTRISCHE ROTIERENDE MASCHINE MIT PERMANENTMAGNETEN**

(71) Anmelder: Siemens Aktiengesellschaft, 80333 München (DE)
(72) Erfinder: Balke, Benjamin, 10589 Berlin (DE); Brach, Karsten, 13589 Berlin (DE); Centner, Matthias, 10555 Berlin (DE); Krabinski, Jeffrey, 12169 Berlin (DE); Meyer, Christian, 13591 Berlin (DE); Wilcke, Ralf, 13351 Berlin (DE)

(57) **Zusammenfassung**

Die Erfindung betrifft eine elektrische rotierende Maschine (2) mit einem Rotor (6) und einem Stator (8), wobei zwischen dem Rotor (6) und dem Stator (8) ein Spalt (10) ausgebildet ist, wobei am Rotor (6) in Umfangsrichtung Magnetpole (12) angeordnet sind, wobei die Magnetpole (12) jeweils eine Mehrzahl von, insbesondere quaderförmigen, Permanentmagneten (14) aufweisen, die mit zumindest einer Aufnahmevorrichtung verbunden sind. Um eine elektrische rotierende Maschine bereitzustellen, die während des Betriebes, im Vergleich zum Stand der Technik, ein verbessertes akustisches Verhalten aufweist, wird vorgeschlagen, dass die zumindest eine Aufnahmevorrichtung der Magnetpole (12) zumindest in einem Verbindungsbereich mit den Permanentmagneten (14) eine in Umfangsrichtung treppenförmig ausgestaltete Kontur (20) aufweist, welche an die Form der Permanentmagnete (14) angepasst ist.

## Beschreibung

Die Erfindung betrifft eine elektrische rotierende Maschine.

Ferner betrifft die Erfindung ein Wasserfahrzeug mit zumindest einer derartigen elektrischen rotierenden Maschine.

Darüber hinaus betrifft die Erfindung ein Verfahren zur Herstellung einer derartigen elektrischen rotierenden Maschine.

Beim Betrieb der meisten Fahrzeuge ist es häufig das Ziel, laute Geräusche zu dämpfen oder gar zu vermeiden. Dies ist beispielsweise der Fall bei Wasserfahrzeugen, insbesondere bei U-Booten.

Die Offenlegungsschrift DE 10 2007 038 668 A1 beschreibt einen Elektromotor, insbesondere Synchronmotor mit einem Ankerspulen aufweisenden Anker und einem Induktor, der permanentmagnetische Polelemente aufweist, wobei die Polelemente jeweils einen Träger und zumindest zwei, in Bewegungsrichtung des Elektromotors gesehen, hintereinander angeordnete Permanentmagnete aufweisen, die untereinander elektrisch isoliert sind und einen gemeinsamen Magnetpol bilden.

Die Offenlegungsschrift WO 2012/101083 A2 beschreibt eine permanenterregte Synchronmaschine mit einem Stator, der ein Wicklungssystem aufweist, das in Nuten eines Blechpakets des Stators angeordnet ist, wobei die Nuten zu einem zwischen dem Stator und einem Rotor bestehendem Luftspalt weisen, wobei der Rotor Permanentmagnete aufweist, die eine gerade Anzahl von Polen bildet, wobei in Umfangsrichtung betrachtet jeder Pol zumindest drei Permanentmagnete aufweist, wobei die radiale Höhe und die Remanenz der Permanentmagnete ausgehend von der Mitte eines Pols zu den Enden des jeweiligen Pols in Umfangsrichtung betrachtet abnimmt und wobei die Koerzitivfeldstärke der Permanentmagnete ausgehend von der Mitte des Pols zu den Enden des Pols zunimmt.

Der Erfindung liegt die Aufgabe zugrunde, eine elektrische rotierende Maschine bereitzustellen, die während des Betriebes, im Vergleich zum Stand der Technik, ein verbessertes akustisches Verhalten aufweist.

Die Aufgabe wird erfindungsgemäß durch eine elektrische rotierende Maschine mit einem Rotor und einem Stator gelöst, wobei zwischen dem Rotor und dem Stator ein Spalt ausgebildet ist, wobei am Rotor in Umfangsrichtung Magnetpole angeordnet sind, wobei die Magnetpole jeweils eine Mehrzahl von, insbesondere quaderförmigen, Permanentmagneten aufweisen, die mit zumindest einer Aufnahmevorrichtung verbunden sind, wobei die zumindest eine Aufnahmevorrichtung der Magnetpole zumindest in einem Verbindungsbereich mit den Permanentmagneten eine in Umfangsrichtung treppenförmig ausgestaltete Kontur aufweist, welche an die Form der Permanentmagnete angepasst ist.

Ferner wird die Aufgabe erfindungsgemäß durch ein Wasserfahrzeug mit zumindest einer derartigen elektrischen rotierenden Maschine gelöst.

Darüber hinaus wird die Aufgabe erfindungsgemäß durch ein Verfahren zur Herstellung einer derartigen elektrischen rotierenden Maschine gelöst, wobei die magnetisierten Permanentmagnete der Magnetpole mit der Aufnahmevorrichtung verbunden werden.

Die in Bezug auf die elektrische rotierende Maschine nachstehend angeführten Vorteile und bevorzugten Ausgestaltungen lassen sich sinngemäß auf das Wasserfahrzeug und das Verfahren übertragen.

Der Erfindung liegt die Überlegung zugrunde, in einer elektrischen rotierenden Maschine, insbesondere in einer Synchronmaschine, ein möglichst sinusförmiges Feld zwischen Rotor und Stator zu erzeugen, um ein verbessertes akustisches Verhalten während des Betriebes der Maschine zu erreichen. Ein im Wesentlichen sinusförmiges Feld weist eine minimale Anzahl von zusätzlichen Spektralanteilen minimaler Amplitude in dem gewünschten Frequenzbereich auf. Unter einer Verbesserung des akustischen Verhaltens versteht man, dass Frequenzen in einem gewünschten Frequenzbereich, beispielsweise in einem von Menschen und/oder Tieren hörbaren und/oder auf andere Weise, beispielsweise über Körperschall, wahrnehmbaren Bereich, unterdrückt werden. Ein verbessertes akustisches Verhalten wird erreicht, indem die Permanentmagnete eines Magnetpols treppenförmig mit zumindest einer Aufnahmevorrichtung auf dem Rotor verbunden sind. Eine Aufnahmevorrichtung ist beispielsweine ein Blechpaket, ein Polrad oder mindestens ein Polträger, wobei der mindestens eine Polträger beispielsweise mit einem Polrad verbunden ist. Der mindestens eine Polträger und/oder das Polrad sind massiv oder geblecht ausgeführt. Ferner sind der Polträger und/oder das Polrad aus einem ferromagnetischen Material, beispielsweise Stahl oder Eisen, oder aus einem nicht-magnetischen metallischen Werkstoff hergestellt. Die treppenförmige Verbindung mit der Aufnahmevorrichtung wird dadurch hergestellt, dass die Aufnahmevorrichtung der Magnetpole zumindest in einem Verbindungsbereich mit den Permanentmagneten eine in Umfangsrichtung treppenförmig ausgestaltete Kontur aufweist, welche an die Form der Permanentmagnete angepasst ist. Die Permanentmagnete sind quaderförmig ausgeführt, wodurch diese einfach und kostengünstig herstellbar sind. Die Abmessungen der Permanentmagnete eines Magnetpols können gleich sein oder innerhalb eines Magnetpols variieren. Durch die treppenförmige Kontur der Aufnahmevorrichtung weisen die Permanentmagnete eines Magnetpols einen unterschiedlichen radialen Abstand zu einer Rotationsachse des Rotors auf. Die treppenförmige Anordnung der Permanentmagnete führt zu einer Minimierung einer Anzahl von zusätzlichen Spektralanteilen während des Betriebes der elektrischen rotierenden Maschine, wodurch das akustische Verhalten der Maschine verbessert wird. Eine Optimierung hinsichtlich einer Größe der Permanentmagnete und der zugehörigen treppenförmigen Kontur findet beispielsweise mittels Simulation, Berechnung und/oder empirisch statt und ist abhängig von einer Remanenz und einer Koerzitivfeldstärke der verwendeten Permanentmagnete. Abweichungen von einer optimierten Geometrie führen zu einer erhöhten Anzahl von zusätzlichen Spektralanteilen und damit zu einem schlechteren akustischen Verhalten der elektrischen rotierenden Maschine während des Betriebes.

Bei einer bevorzugten Ausführungsform ist die radiale Höhe der Kontur in der Mitte des jeweiligen Magnetpols maximal. Dies führt zu einer für das akustische Verhalten der elektrischen rotierenden Maschine besonders günstigen Feldverteilung.

In einer bevorzugten Ausgestaltung ist die radiale Höhe der Kontur im Verbindungsbereich mit den äußeren Permanentmagneten des jeweiligen Magnetpols minimal. Dies führt ebenfalls zu einer für das akustische Verhalten der elektrischen rotierenden Maschine besonders günstigen Feldverteilung.

Besonders vorteilhaft nimmt die radiale Höhe der treppenförmigen Kontur von der Mitte des jeweiligen Magnetpols zu den Rändern hin stufenweise ab. Dies führt ebenfalls zu einer für das akustische Verhalten der elektrischen rotierenden Maschine besonders günstigen Feldverteilung.

Bei einer weiteren vorteilhaften Ausführungsform sind die Magnetpole im Querschnitt achsensymmetrisch ausgestaltet. Jeweils korrespondierende achsensymmetrisch angeordnete Permanentmagnete sind durch Drehen erhältlich, wodurch für die Realisierung des Rotors weniger verschiedene Permanentmagnete erforderlich sind. Daraus ergibt sich ein Kostenvorteil.

In einer weiteren vorteilhaften Ausgestaltung bilden die Permanentmagnete eines Magnetpols auf einer dem Spalt zugewandten Seite eine in Umfangsrichtung treppenförmig ausgestaltete Kontur aus. Beispielsweise entspricht die Kontur der dem Spalt zugewandten Seite der Permanentmagnete der Kontur der Aufnahmevorrichtung. Durch die ebenfalls treppenförmige Kontur der Permanentmagnete auf der dem Spalt zugewandten Seite ist das akustische Verhalten der Maschine einfach und schnell, beispielsweise durch Variation der radialen Abmessungen der Permanentmagnete optimierbar.

Besonders vorteilhaft sind die Permanentmagnete eines Magnetpols, zumindest in Radialrichtung, gleich groß ausgebildet. Durch eine zumindest in Radialrichtung, gleich groß ausgebildete Querschnittsfläche sind die Permanentmagnete einfach und kostengünstig herstellbar.

Bei einer weiteren vorteilhaften Ausführungsform weisen zumindest zwei Permanentmagnete eines Magnetpols eine unterschiedliche Remanenz und/oder Koerzitivfeldstärke auf. Insbesondere weisen Permanentmagnete in der Polmitte eine andere Remanenz und/oder Koerzitivfeldstärke auf, als die Permanentmagnete, die durch die Treppung tiefer gesetzt ist. Durch Variation der Remanenz und/oder der Koerzitivfeldstärke ergeben sich zusätzliche Freiheitsgrade bei der Optimierung des akustischen Verhaltens der elektrischen rotierenden Maschine.

In einer bevorzugten Ausgestaltung sind die Magnetpole in Axialrichtung jeweils in zumindest zwei Teilpole aufgeteilt. Insbesondere sind die Teilpole in Axialrichtung hintereinander angeorndet. Durch Aufteilung der Magnetpole in Teilpole ergeben sich zusätzliche Freiheitsgrade bei der Optimierung des akustischen Verhaltens der elektrischen rotierenden Maschine.

Besonders vorteilhaft sind die zumindest zwei Teilpole pfeilförmig angeordnet. Die pfeilförmige Anordnung wird auch Pfeil-Schrägung oder Anordnung in einem Fischgrätmuster genannt. Unter einer pfeilförmigen Anordnung der Teilpole ist, bei einem Blick in Radialrichtung auf die Rotoroberfläche, eine gewinkelte Ausrichtung der jeweiligen Teilpole zueinander zu verstehen. Beispielsweise sind die jeweiligen Teilpole unter einem stumpfen Winkel, insbesondere zwischen 170° bis 178° zueinander angeordnet. Durch die Schrägstellung der Teilpole wird eine Unterdrückung von Nutharmonischen erreicht.

Bei einer weiteren vorteilhaften Ausführungsform sind die Permanentmagnete der Magnetpole auf der Aufnahmevorrichtung aufgeklebt. Aufkleben ist insbesondere bei einer großen Anzahl von Permanentmagneten kostengünstig und zuverlässig, um die Permanentmagnete gegen im Betrieb auftretende Fliehkräfte zu sichern.

In einer weiteren vorteilhaften Ausgestaltung enthalten die Permanentmagnete Neodym, Eisen und Bor und/oder Samarium und/oder Kobalt. Beispielsweise ist Neodym-Eisen-Bor eine Legierung, aus der die derzeit stärksten Permanentmagnete hergestellt werden. Weiterhin zeichnen sich Permanentmagnete, die Samarium und/oder Kobalt aufweisen, durch eine hohe Temperaturbeständigkeit aus.

Im Folgenden wird die Erfindung anhand der in den Figuren dargestellten Ausführungsbeispiele näher beschrieben und erläutert.

Es zeigen:
- FIG 1: eine schematische Darstellung einer elektrischen rotierenden Maschine im Querschnitt,
- FIG 2: eine vergrößerte Darstellung einer ersten Ausführungsform eines Rotors im Bereich eines Polpaares,
- FIG 3: eine vergrößerte Darstellung einer zweiten Ausführungsform eines Rotors,
- FIG 4: eine vergrößerte Darstellung einer dritten Ausführungsform eines Rotors,
- FIG 5: eine vergrößerte Darstellung einer vierten Ausführungsform eines Rotors,
- FIG 6: einen dreidimensionalen Ausschnitt eines Rotors im Bereich der Magnetpole und
- FIG 7: ein Wasserfahrzeug mit einer elektrischen rotierenden Maschine.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

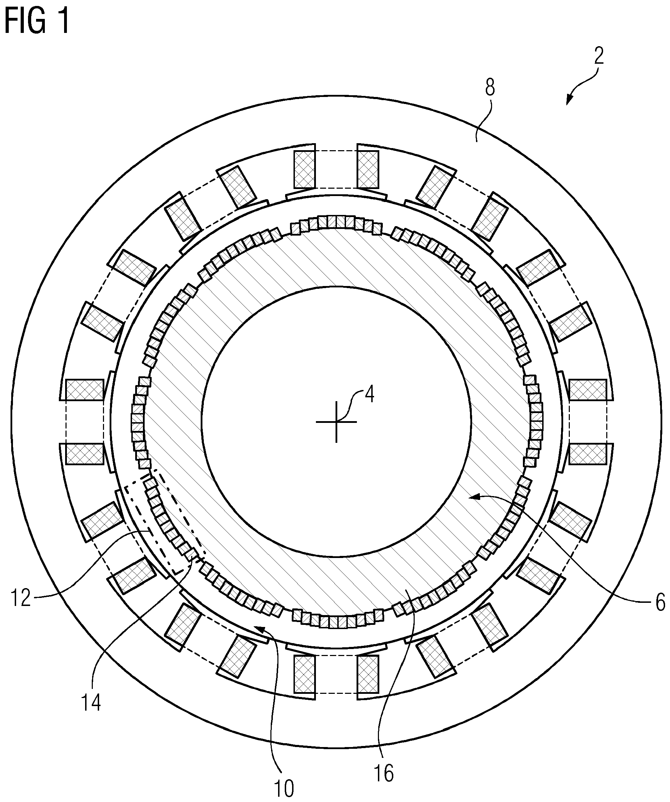

FIG 1 zeigt eine schematische Darstellung einer elektrischen rotierenden Maschine 2 im Querschnitt. Die elektrische rotierende Maschine 2 ist mit einer Leistung von zumindest 1 Megawatt betreibbar, ist als permanenterregte Synchronmaschine ausgeführt und umfasst einen um eine Rotationsachse 4 rotierbaren Rotor 6 und einen Stator 8, wobei der Stator 8 beispielhaft radial außerhalb des Rotors 6 angeordnet ist. Die Rotationsachse 4 definiert eine Axialrichtung, eine Radialrichtung und eine Umfangsrichtung. Zwischen dem Rotor 6 und dem Stator 8 ist ein Spalt 10, der insbesondere als Luftspalt ausgeführt ist, ausgebildet. Alternativ ist der Rotor 6 als Glockenläufer ausgeführt, wobei der Stator 8 radial außerhalb oder radial innerhalb des Glockenläufers angeordnet ist.

Der Rotor 6 weist eine Mehrzahl von Magnetpolen 12 auf, die jeweils eine Mehrzahl von Permanentmagneten 14 umfassen. Die Permanentmagnete 14 der Magnetpole 12 sind auf einem Polrad 16 aufgeklebt und enthalten beispielsweise Neodym, Eisen und Bor und/oder Samarium und/oder Kobalt. Insbesondere sind die Permanentmagnete 14 aus Samarium-Kobalt, Aluminium-Nickel-Kobalt, Neodym-Eisen-Bor, Samarium-Eisen-Nickel oder aus einer Mischung mindestens zwei der genannten Legierungen hergestellt. Das Polrad 16 ist massiv oder geblecht ausgeführt und aus einem ferromagnetischen Material, beispielsweise Stahl oder Eisen, hergestellt. Alternativ ist das Polrad 16, insbesondere aus Gewichtsgründen, aus einem nicht-magnetischen Material hergestellt. Jeweils zwei Magnetpole 12 bilden ein Polpaar 18, wobei durch das Polrad 16 ein magnetischer Rückschluss hergestellt wird. Zusätzlich oder alternativ werden die Permanentmagnete 14 über Bandagen fixiert. Insbesondere sind die Permanentmagnete 14 der Magnetpole 12 quaderförmig ausgeführt und so auf einer im Wesentlichen ebenen Fläche des Polrads 16 aufgeklebt, dass zumindest die Seitenflächen benachbarter Permanentmagnete 14 eines Magnetpols 12 im Wesentlichen parallel angeordnet sind. Beispielsweise berühren sich die Seitenflächen benachbarter Permanentmagnete 14 eines Magnetpols 12 flächig, insbesondere vollflächig.

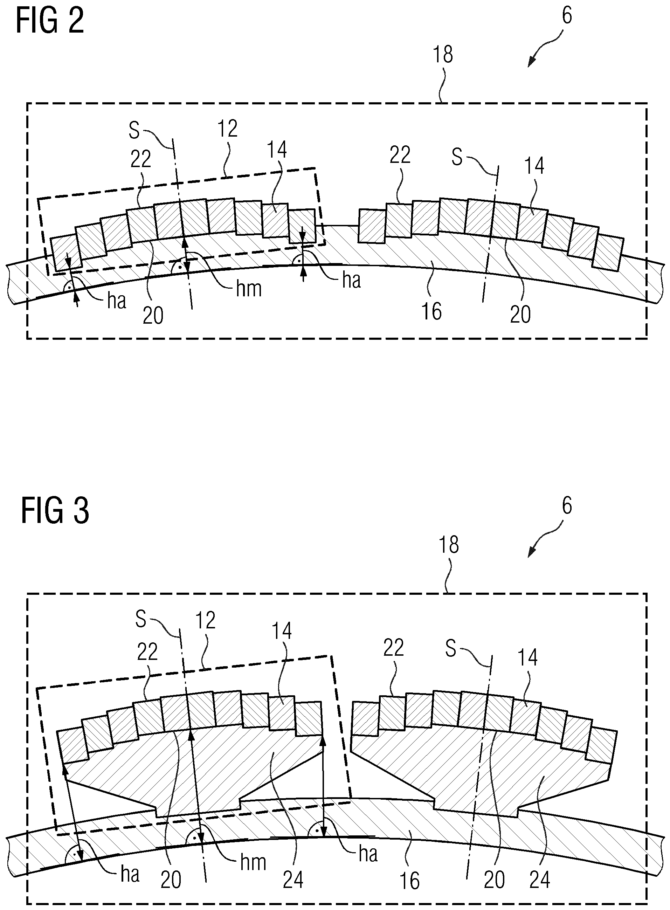

FIG 2 zeigt eine vergrößerte Darstellung einer ersten Ausführungsform eines Rotors 6 im Bereich eines Polpaares 18. Die beiden korrespondierenden Magnetpole 12 des Polpaares 18 umfassen jeweils beispielhaft zehn Permanentmagnete 14, welche einen identisch großen rechteckigen Querschnitt aufweisen und direkt auf dem Polrad 16 aufgeklebt sind, sodass das Polrad 16 als Aufnahmevorrichtung für die Permanentmagnete 14 ausgeführt ist.

Die Permanentmagnete 14 des jeweiligen Magnetpols 12 sind treppenförmig auf dem Polrad 16 angeordnet, wobei das Polrad 16 in einem Verbindungsbereich mit den Permanentmagneten 14 eine in Umfangsrichtung treppenförmig ausgestaltete Kontur 20 aufweist, welche an die Form der Permanentmagnete 14 angepasst ist. Die Permanentmagnete 14 sind im Polrad 16 teilweise versenkt und derartig mit dem Rotor 6 verbunden, dass die Seitenflächen benachbarter Permanentmagnete 14 im Wesentlichen parallel angeordnet sind, wodurch ein bestmöglicher Füllfaktor erreicht wird. Eine mittige radiale Höhe hm der Kontur 20 in der Mitte des jeweiligen Magnetpols 12 ist maximal während eine äußere radiale Höhe ha der Kontur 20 im Verbindungsbereich mit den äußeren Permanentmagneten 14 des jeweiligen Magnetpols 12 minimal ist. Ferner nimmt die radiale Höhe der treppenförmigen Kontur 20 in Umfangsrichtung betrachtet von der Mitte des jeweiligen Magnetpols 12 zu den Enden hin ab, wobei die Magnetpole 12 im Querschnitt achsensymmetrisch zu einer radialen Symmetrieachse S ausgestaltet sind. Da die Permanentmagnete 14 einen identisch großen rechteckigen Querschnitt aufweisen, bilden sie, bei in einer elektrischen rotierenden Maschine 2 eingebautem Rotor 6, auf einer dem Spalt 10 zugewandten Seite ebenfalls eine in Umfangsrichtung treppenförmig ausgestaltete Kontur 22 aus, welche der treppenförmigen Kontur des Polrads 16 entspricht. Durch die getreppte Anordnung der Permanentmagnete 14 auf dem Polrad 16 ergibt sich ein annährend sinusförmiges Luftspaltfeld, was zu einer Verbesserung der akustischen Eigenschaften der elektrischen rotierenden Maschine 2 führt, da die Zahl und die Amplitude anregender Kraftwellen reduziert wird. Zur weiteren Optimierung der akustischen Eigenschaften werden unterschiedliche Magnetmaterialien verwendet, wobei die Permanentmagnete 14 in der Mitte des jeweiligen Magnetpols 12 eine andere Remanenz und/oder Koerzitivfeldstärke aufweisen als die Permanentmagnete 14, die durch die Treppung zu den Enden hin tiefer gesetzt sind. Die weitere Ausführung des Rotors 6 in FIG 2 entspricht der Ausführung in FIG 1.

FIG 3 zeigt eine vergrößerte Darstellung einer zweiten Ausführungsform eines Rotors 6 im Bereich eines Polpaares 18. Die beiden korrespondierenden Magnetpole 12 des Polpaares 18 umfassen, wie in FIG 2, jeweils beispielhaft zehn Permanentmagnete 14, welche einen identisch großen rechteckigen Querschnitt aufweisen. Die Permanentmagnete 14 sind jeweils treppenförmig auf einem Polträger 24 aufgeklebt, der als Aufnahmevorrichtung für die Permanentmagnete 14 ausgeführt ist, wobei die Polträger 24 auf dem Polrad 16 angeordnet und mit diesem, insbesondere unlösbar, verbunden sind. Die Polträger 24 des Rotors 6 sind beispielsweise identisch, zumindest im Querschnitt symmetrisch ausgestaltet und in gleich großen Abständen in Umfangsrichtung auf dem Polrad 16 des Rotors 6 angeordnet. Ferner sind die Polträger 24 massiv oder geblecht ausgeführt und aus einem ferromagnetischen Material, beispielsweise Stahl oder Eisen, hergestellt. Ein magnetischer Rückschluss wird über das Polrad 16 hergestellt. Alternativ sind die Polträger 24, insbesondere aus Gewichtsgründen, aus einem nicht-magnetischen Material hergestellt.

Die Polträger 24 weisen in einem Verbindungsbereich mit den Permanentmagneten 14 eine in Umfangsrichtung treppenförmig ausgestaltete Kontur 20 auf, welche an die Form der Permanentmagnete 14 angepasst ist. Die Permanentmagnete 14 sind im Polträger 24 teilweise versenkt angeordnet. Eine mittige radiale Höhe hm der Kontur 20 in der Mitte des jeweiligen Magnetpols 12 ist maximal während eine äußere radiale Höhe ha der Kontur 20 in einem Verbindungsbereich mit den äußeren Permanentmagneten 14 des jeweiligen Magnetpols 12 minimal ist. Ferner nimmt die radiale Höhe der treppenförmigen Kontur 20 in Umfangsrichtung betrachtet von der Mitte des jeweiligen Magnetpols 12 zu den Enden hin ab, wobei die Magnetpole 12 im Querschnitt achsensymmetrisch zu einer radialen Symmetrieachse S ausgestaltet sind. Da die Permanentmagnete 14 einen identisch großen rechteckigen Querschnitt aufweisen, bilden sie, bei in einer elektrischen rotierenden Maschine 2 eingebautem Rotor 6, auf einer dem Spalt 10 zugewandten Seite ebenfalls eine in Umfangsrichtung treppenförmig ausgestaltete Kontur 22 aus, welche der treppenförmigen Kontur des Polträgers 24 entspricht. Die weitere Ausführung des Rotors 6 in FIG 3 entspricht der Ausführung in FIG 2.

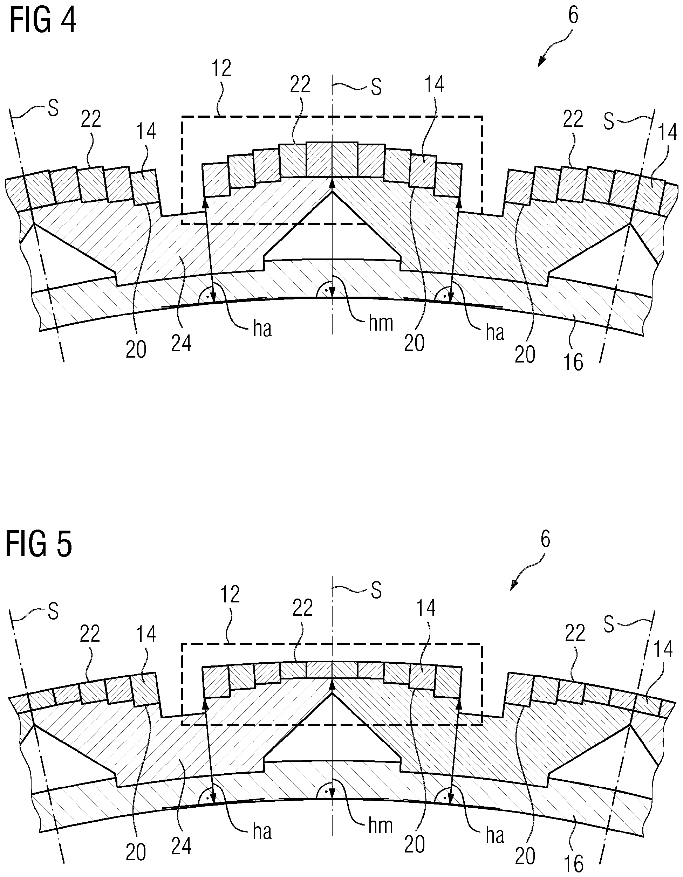

FIG 4 zeigt eine vergrößerte Darstellung einer dritten Ausführungsform eines Rotors 6 im Bereich eines Magnetpols 12.

Die treppenförmig aufgeklebten Permanentmagnete 14 eines Magnetpols 12 sind, insbesondere gleichmäßig und symmetrisch, auf zwei Polträger 24 aufgeteilt, sodass ein magnetischer Rückschluss ohne das Polrad 16 herstellbar ist. Die weitere Ausführung des Rotors 6 in FIG 4 entspricht der Ausführung in FIG 3.

FIG 5 zeigt eine vergrößerte Darstellung einer vierten Ausführungsform eines Rotors 6 im Bereich eines Magnetpols 12. Während die Polträger 24, wie in FIG 4 dargestellt, in einem Verbindungsbereich mit den Permanentmagneten 14 eine in Umfangsrichtung treppenförmig ausgestaltete Kontur 20 aufweisen, welche an die Form der Permanentmagnete 14 angepasst ist, und die Permanentmagnete 14 im Polträger 24 teilweise versenkt sind, bilden die Permanentmagnete 14, bei in einer elektrischen rotierenden Maschine 2 eingebautem Rotor 6, auf einer dem Spalt 10 zugewandten Seite eine im Wesentlichen plan ausgestaltete Kontur 22 aus. Durch die plane Kontur 22, bilden die Permanentmagnete 14 eines Magnetpols 12 auf der dem Spalt 10 zugewandten Seite eine ebene Fläche aus. Die Permanentmagnete 14 weisen einen rechteckigen Querschnitt mit jeweils unterschiedlichen Abmessungen in Radialrichtung auf, wobei der Magnetpol 12 im Querschnitt achsensymmetrisch zu einer Symmetrieachse S ausgeführt ist.

Zur Optimierung des akustischen Verhaltens während des Betriebes weisen die Permanentmagnete 14 in der Mitte des jeweiligen Magnetpols 12 eine andere Remanenz und/oder Koerzitivfeldstärke auf als die Permanentmagnete 14, die durch die Treppung zu den Rändern hin tiefer gesetzt sind. Die weitere Ausführung des Rotors 6 in FIG 5 entspricht der Ausführung in FIG 4.

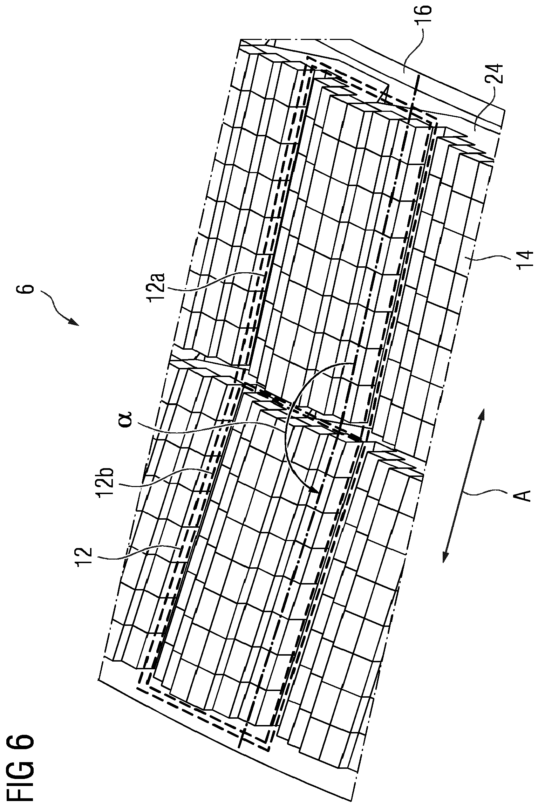

FIG 6 zeigt einen dreidimensionalen Ausschnitt eines Rotors 6 im Bereich der Magnetpole 12, wobei die Magnetpole 12 in Axialrichtung A jeweils in beispielhaft zwei Teilpole 12a, 12b aufgeteilt sind. Die beiden Teilpole 12a, 12b sind auf dem Rotor 6 pfeilförmig angeordnet, um zusätzlich das akustische Verhalten während des Betriebes zu optimieren. Unter einer pfeilförmigen Anordnung der Teilpole 12a, 12b ist, bei einem Blick in Radialrichtung auf die Rotoroberfläche, eine gewinkelte Ausrichtung der jeweiligen Teilpole 12a, 12b zueinander unter einem stumpfen Winkel α zu verstehen. Beispielsweise sind die jeweiligen Teilpole 12a, 12b unter einem Winkel α von 170° bis 178°zueinander angeordnet. Die weitere Ausführung des Rotors 6 in FIG 6 entspricht einer der Ausführungen von FIG 2 bis FIG 5.

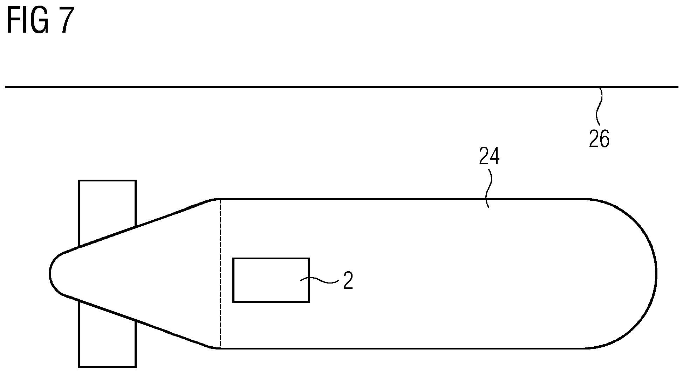

FIG 7 zeigt ein Wasserfahrzeug 26 mit einer elektrischen rotierenden Maschine 2, welches exemplarisch als U-Boot ausgeführt ist. Das U-Boot befindet sich unterhalb einer Wasseroberfläche 28.

Zusammenfassend betrifft die Erfindung eine elektrische rotierende Maschine 2 mit einem Rotor 6 und einem Stator 8, wobei zwischen dem Rotor 6 und dem Stator 8 ein Spalt 10 ausgebildet ist, wobei am Rotor 6 in Umfangsrichtung Magnetpole 12 angeordnet sind, wobei die Magnetpole 12 jeweils eine Mehrzahl von, insbesondere quaderförmigen, Permanentmagneten 14 aufweisen, die mit zumindest einer Aufnahmevorrichtung verbunden sind. Um eine elektrische rotierende Maschine bereitzustellen, die während des Betriebes, im Vergleich zum Stand der Technik, ein verbessertes akustisches Verhalten aufweist, wird vorgeschlagen, dass die zumindest eine Aufnahmevorrichtung der Magnetpole 12 zumindest in einem Verbindungsbereich mit den Permanentmagneten 14 eine in Umfangsrichtung treppenförmig ausgestaltete Kontur 20 aufweist, welche an die Form der Permanentmagnete 14 angepasst ist.

## Patentansprüche

1. Elektrische rotierende Maschine (2) mit einem Rotor (6) und einem Stator (8),
wobei zwischen dem Rotor (6) und dem Stator (8) ein Spalt (10) ausgebildet ist,
wobei am Rotor (6) in Umfangsrichtung Magnetpole (12) angeordnet sind,
wobei die Magnetpole (12) jeweils eine Mehrzahl von, insbesondere quaderförmigen, Permanentmagneten (14) aufweisen, die mit zumindest einer Aufnahmevorrichtung verbunden sind, **dadurch gekennzeichnet, dass**
die zumindest eine Aufnahmevorrichtung der Magnetpole (12) zumindest in einem Verbindungsbereich mit den Permanentmagneten (14) eine in Umfangsrichtung treppenförmig ausgestaltete Kontur (20) aufweist, welche an die Form der Permanentmagnete (14) angepasst ist.

2. Elektrische rotierende Maschine (2) nach Anspruch 1,
wobei die radiale Höhe (hm) der Kontur (20) in der Mitte des jeweiligen Magnetpols (12) maximal ist

3. Elektrische rotierende Maschine (2) nach einem der Ansprüche 1 oder 2,
wobei die radiale Höhe (ha) der Kontur (20) im Verbindungsbereich mit den äußeren Permanentmagneten (14) des jeweiligen Magnetpols (12) minimal ist.

4. Elektrische rotierende Maschine (2) nach einem der vorherigen Ansprüche,
wobei die radiale Höhe (ha, hm) der treppenförmigen Kontur (20) von der Mitte des jeweiligen Magnetpols (12) zu den Rändern hin stufenweise abnimmt.

5. Elektrische rotierende Maschine (2) nach einem der vorherigen Ansprüche,
wobei die Magnetpole (12) im Querschnitt achsensymmetrisch ausgestaltet sind.

6. Elektrische rotierende Maschine (2) nach einem der vorherigen Ansprüche,
wobei die Permanentmagnete (14) eines Magnetpols (12) auf einer dem Spalt (10) zugewandten Seite eine in Umfangsrichtung treppenförmig ausgestaltete Kontur (22) ausbilden.

7. Elektrische rotierende Maschine (2) nach einem der vorherigen Ansprüche,
wobei die Permanentmagnete (14) eines Magnetpols (12), zumindest in Radialrichtung, gleich groß ausgebildet sind.

8. Elektrische rotierende Maschine (2) nach einem der vorherigen Ansprüche,
wobei zumindest zwei Permanentmagnete (14) eines Magnetpols (12) eine unterschiedliche Remanenz und/oder Koerzitivfeldstärke aufweisen.

9. Elektrische rotierende Maschine (2) nach einem der vorherigen Ansprüche,
wobei die Magnetpole (12) in Axialrichtung (A) jeweils in zumindest zwei Teilpole (12a, 12b) aufgeteilt sind.

10. Elektrische rotierende Maschine (2) nach Anspruch 9,
wobei die zumindest zwei Teilpole (12a, 12b) pfeilförmig angeordnet sind.

11. Elektrische rotierende Maschine (2) nach einem der vorherigen Ansprüche,
wobei die Permanentmagnete (14) der Magnetpole (12) auf der Aufnahmevorrichtung aufgeklebt sind.

12. Elektrische rotierende Maschine (2) nach einem der vorherigen Ansprüche,
wobei die Permanentmagnete (14) Neodym, Eisen und Bor und/oder Samarium und/oder Kobalt enthalten.

13. Wasserfahrzeug (24) mit zumindest einer elektrischen rotierenden Maschine (2) nach einem der vorherigen Ansprüche.

14. Verfahren zur Herstellung einer elektrischen rotierenden Maschine (2) nach einem der Ansprüche 1 bis 12,
wobei die magnetisierten Permanentmagnete (14) der Magnetpole (12) mit der Aufnahmevorrichtung verbunden werden.

15. Verfahren nach Anspruch 14,
wobei die Permanentmagnete (14) der Magnetpole (12) derartig mit dem Rotor (6) verbunden werden, dass zumindest die Seitenflächen benachbarter Permanentmagnete (14) im Wesentlichen parallel angeordnet sind.
